# EUROPÄISCHE PATENTANMELDUNG

(11) **EP 1 701 258 A1**
(43) Veröffentlichungstag der Anmeldung: **13.09.2006**
(21) Anmeldenummer: 06110908.8
(22) Anmeldetag: 09.03.2006
(51) Int. Cl.: G06F 9/44

(54) **Darstellung hierarchischer Softwarestrukturen**

(30) Priorität: 10.03.2005 DE 102005011155
(71) Anmelder: SIEMENS AKTIENGESELLSCHAFT, 80333 München (DE)
(72) Erfinder: Steiner, Jochen, 90574, Rosstal (DE)

(57) **Zusammenfassung**

Die Erfindung betrifft ein Verfahren, ein Computerprodukt und eine Vorrichtung zur Darstellung von in einer hierarchischen Struktur geordneten Elementen einer Softwareumgebung. Um eine übersichtliche und anwenderfreundlich navigierbare Darstellung der Elemente zu ermöglichen, werden bei der Darstellung folgende Schritte vorgeschlagen:
- Anzeigen einer linearen Kette aus jeweils genau einen stellvertretenden Element jeder Hierarchieebene, wobei die stellvertretenden Elemente innerhalb der linearen Kette gemäß ihrer Hierarchiestufe geordnet sind und
- Anzeigen weiterer Elemente einer ersten Hierarchiestufe, nach dem der Anwender ein erstes stellvertretendes Element der linearen Kette, welches der ersten Hierarchiestufe zugeordnet ist, selektiert hat.

## Beschreibung

Die Erfindung betrifft ein Verfahren, ein Computerprogrammprodukt und eine Vorrichtung zur Darstellung von in einer hierarchischen Struktur geordneten Elementen einer Softwareumgebung.

Ein derartiges Verfahren, Computerprogrammprodukt bzw. eine derartige Vorrichtung kommt bei grafischen Benutzeroberflächen zum Einsatz, bei denen hierarchische Strukturen anzuzeigen sind. Beispielsweise kann es sich hierbei um ein Dateimanagementsystem wie den Windows Explorer handeln, mit dem Dateien hierarchisch geordnet werden können. Auch verschiedene Projektierungswerkzeuge weisen im Allgemeinen hierarchisch strukturierte Elemente auf. Ein Tool zur Projektierung eines Antriebssystems würde zum Beispiel unter dem Oberbegriff Antriebe verschiedene Antriebskonzepte anbieten. Zu jedem Antriebskonzept stehen u. U. verschiedene Regelungsstrategien zur Verfügung, die wiederum den Antriebskonzepten hierarchisch untergeordnet sein können. Ein weiteres Bespiel sind Grafikprogramme, bei denen beispielsweise verschiedenste Werkzeuge entsprechenden Oberbegriffen hierarchisch zugeordnet sind.

Derartige hierarchische Strukturen werden in der Regel in Form eines Baumes auf einem Bildschirm dargestellt wie zum Beispiel vom Windows Explorer bekannt ist. Je nach Größe des Baumes werden einem Anwender Scrollbalken zur Verfügung gestellt, mit denen der Baum vertikal und/oder horizontal "durchgeblättert" werden kann. Da bei sehr umfangreichen Bäumen der Anwender häufig den Überblick über die Position eines Elementes innerhalb der hierarchischen Struktur verlieren kann, wird zusätzlich zum Baum ein aktueller Pfad eines selektierten Elementes angezeigt.

Der Erfindung liegt die Aufgabe zu Grunde, eine übersichtliche und anwenderfreundlich navigierbare Darstellung hierarchisch geordneter Elemente zu ermöglichen.

Diese Aufgabe wird durch ein Verfahren zur Darstellung von in einer hierarchischen Struktur geordneten Elementen einer Softwareumgebung gelöst mit folgenden Verfahrensschritten:
- Anzeigen einer linearen Kette aus jeweils genau einem stellvertretenden Element jeder Hierarchieebene, wobei die stellvertretenden Elemente innerhalb der linearen Kette gemäß ihrer Hierarchiestufe geordnet sind und
- Anzeigen weiterer Elemente einer ersten Hierarchiestufe, nachdem ein Anwender ein erstes stellvertretendes Element der linearen Kette, welches der ersten Hierarchiestufe zugeordnet ist, selektiert hat.

Diese Aufgabe wird weiter durch ein Computerprogrammprodukt zur Durchführung eines derartigen Verfahrens gelöst.

Ferner wird die Aufgabe durch eine Vorrichtung zur Darstellung von in einer hierarchischen Struktur geordneten Elementen einer Softwareumgebung gelöst mit
- ersten Mitteln zur Anzeige einer linearen Kette aus jeweils genau einem stellvertretenden Element jeder Hierarchieebene, wobei die stellvertretenden Elemente innerhalb der linearen Kette gemäß ihrer Hierarchiestufe geordnet sind und
- zweiten Mitteln zur Anzeige weiterer Elemente einer ersten Hierarchiestufe, nachdem ein Anwender ein erstes stellvertretendes Element der linearen Kette, welches der ersten Hierarchiestufe zugeordnet ist, selektiert hat.

Der Erfindung liegt die Erkenntnis zugrunde, dass insbesondere bei sehr großen hierarchischen Strukturen eine Anzeige in Form einer linearen Kette für einen Anwender sehr viel übersichtlicher und einfacher zu navigieren sein kann, als die übliche Darstellung derartiger Strukturen in Form eines Baumes. Die lineare Kette entspricht einem navigierbaren Pfad, innerhalb dessen jede Hierarchiestufe durch genau ein stellvertretendes Element dargestellt wird. Die dargestellten stellvertretenden Elemente sind von dem Anwender beispielsweise mit Hilfe eines Mauszeigers selektierbar. Sobald der Anwender ein stellvertretendes Element selektiert, werden die weiteren Elemente, die Bestandteil der Hierarchieebene des selektierten Elementes sind angezeigt.

Das stellvertretende Element jeder Hierarchiestufe kann von dem Anwender im Allgemeinen frei gewählt werden. So kann der Anwender z.B., nachdem die weiteren Elemente auf dem Bildschirm angezeigt werden, eines dieser Elemente auswählen. Das so ausgewählte Element wird anschließend als stellvertretendes Element der entsprechenden Hierarchiestufe innerhalb der linearen Kette angezeigt, sobald die Liste der weiteren Elemente dieser Hierarchiestufe wieder geschlossen wird.

Bei der erfindungsgemäßen Darstellung der hierarchischen Struktur in Form einer navigierbaren Pfadanzeige bzw. einer linearen Kette erhält der Anwender sehr leicht einen Überblick über die aktuelle Position jedes dargestellten Elementes innerhalb der hierarchischen Struktur. Im Gegensatz zu einer Darstellung einer umfangreichen hierarchischen Struktur in Form eines Baumes ist hierzu kein Scrollen erforderlich. Auch ist der Platzbedarf der navigierbaren Pfadanzeige im Vergleich zu einem Baum wesentlich geringer. Dies gilt insbesondere dann, wenn der Anwender nicht aktiv navigieren will, wenn also die weiteren Elemente nicht auf dem Bildschirm angezeigt werden. Der letztgenannte Vorteil ist insbesondere bei Applikation von großer Bedeutung, deren Hauptaufgabe nicht im Navigieren innerhalb der hierarchischen Struktur selbst liegt. Schließlich ist bei der vorgeschlagenen erfindungsgemäßen Darstellung der hierarchischen Struktur in Form einer linearen Kette auch die zusätzliche Anzeige einer Pfadangabe für ein selektiertes Objekt nicht notwendig. Der Anwender kann anhand der dargestellten linearen Kette sehr schnell die Pfade der einzelnen stellvertretenden Elemente ablesen.

Bei der Darstellung der linearen Kette auf einem Bildschirm sind verschiedene Darstellungsarten denkbar und von der Erfindung umfasst. In einer ersten Ausführungsform der Erfindung werden beim Anzeigen der linearen Kette die stellvertretenden Elemente in horizontaler Richtung auf- oder absteigende geordnet und insbesondere durch Trennzeichen voneinander getrennt. Alternativ hierzu werden bei einer zweiten Ausführungsform der Erfindung beim Anzeigen der linearen Kette die stellvertretenden Elemente in vertikaler Richtung auf- oder absteigend geordnet und insbesondere durch Trennzeichen voneinander getrennt.

In einer zweckmäßigen Ausführungsform werden die weiteren Elemente in Form einer Liste angezeigt. Innerhalb der Liste können die weiteren Elemente vertikal oder horizontal geordnet sein. Auch für die Position einer derartigen Liste auf dem Bildschirm sind verschiedene Ausführungsformen denkbar und von der Erfindung umfasst. Beispielsweise kann die Liste unmittelbar über dem selektierten ersten stellvertretenden Element angeordnet werden, so dass das erste stellvertretende Element direkt als Listenelement erscheint. Alternativ hierzu kann die Liste unter oder über dem vom Anwender selektierten ersten stellvertretenden Element angeordnet werden.

Insbesondere dann, wenn die Liste sehr viele weitere Elemente enthält, ist es zweckmäßig, dass die Liste einen Scrollbalken aufweist. Mit Hilfe des Scrollbalkens ist der Anwender in der Lage, weitere Elemente, die aus Platzgründen nicht direkt auf dem Bildschirm dargestellt werden, anzuwählen.

Auch für die Darstellung der Elemente der Softwareumgebung existieren verschiedene Ausführungsformen, die von der Erfindung umfasst sind. Beispielsweise kann es zweckmäßig sein, die Elemente der Softwareumgebung in grafischer Form darzustellen. Dies kann beispielsweise in Form eines Icons ausgeführt werden. Alternativ hierzu können die Elemente der Softwareumgebung in textbasierter Form dargestellt werden.

Die lineare Kette dient in erster Linie der Auswahl eines Elementes aus einer Liste vorhandener Elemente. Bei einem Dateimanagementsystem handelt es sich bei den Elementen in der Regel um Dateinamen. Alternativ können aber auch die Elemente Funktionen der Softwareumgebung repräsentieren. Beispielsweise kann in einer zweiten Hierarchieebene unterhalb der ersten Hierarchieebene ein Element angeordnet sein, welches eine Funktion aufruft, mit deren Hilfe ein neues Hierarchieelement der zweiten Hierarchieebene generiert wird.

Je nach Strukturtiefe der hierarchischen Struktur kann es möglich sein, dass die Elemente der linearen Kette nicht mehr in einer Zeile auf einem Bildschirm angezeigt werden können. In einem solchen Fall kann die Anzeige der navigierbaren Pfadanzeige in mehreren Zeilen erfolgen. Bei einer textbasierten Darstellung der Elemente der linearen Kette kann der angezeigte Text der Ebenen gekürzt dargestellt werden. Erst bei einer Selektion des Elementes mit Hilfe des Mauszeigers wird der vollständige Name eines Elementes angezeigt.

Ferner kann es bei einer sehr großen Strukturtiefe der hierarchischen Struktur sinnvoll sein, die obersten Hierarchieebenen oder Hierarchieebenen in mitten der Hierarchie durch Punkte zu ersetzen.

Bei einem vorteilhaften Anwendungsfall wird das Verfahren zur Darstellung von Elementen eines Projektierungswerkzeugs insbesondere für die Automatisierungstechnik vorgesehen. Bei der Projektierung automatisierungstechnischer Systeme werden häufig sehr komplexe Werkzeuge eingesetzt, bei denen dem Anwender verschiedene hierarchisch geordneter Elemente zur Verfügung gestellt werden.

Im Folgenden wird die Erfindung anhand der in den Figuren dargestellten Ausführungsbeispiele näher beschrieben und erläutert. Es zeigen:
FIG 1 einen Suchbaum zur Darstellung einer hierarchischen Struktur gemäß Stand der Technik,
FIG 2 eine Darstellung von in einer hierarchischen Struktur geordneten Elementen gemäß einer ersten Ausführung der Erfindung und
FIG 3 eine Darstellung von in einer hierarchischen Struktur geordneten Elementen gemäß einer zweiten Ausführung der Erfindung

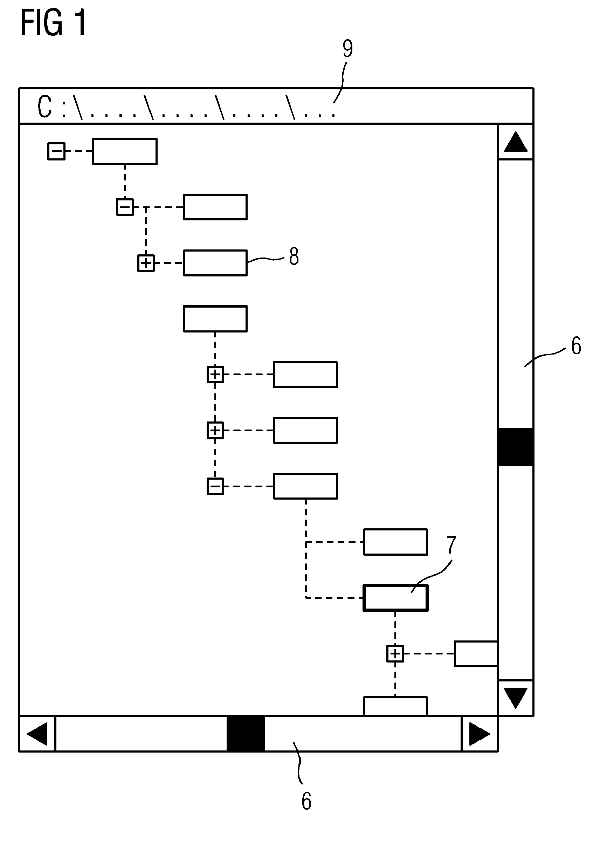

FIG 1 zeigt einen Suchbaum zur Darstellung einer hierarchischen Struktur gemäß Stand der Technik. Aufgrund des erheblichen Platzbedarfs dieser Darstellungsform werden bei der Bildschirmdarstellung der Struktur sowohl ein vertikaler als auch ein horizontaler Scrollbalken 6 angeboten, mit denen ein Anwender die aus Platzgründen nicht darstellbaren Elemente des Suchbaums anwählen kann.

Nachdem der Anwender mit einer Maus ein Element des Suchbaums angewählt hat, zeigt eine Pfadangabe 9 die Position des selektierten Suchbaumelementes 7 innerhalb der hierarchischen Struktur an. Dies ist aufgrund der verhältnismäßig unübersichtlichen Darstellungsform der Struktur notwendig.

Möchte nun der Anwender ein weiteres Element anwählen, welches sich beispielsweise hierarchisch unterhalb eines Suchbaumelementes einer zweiten Hierarchieebene 8 der Struktur befindet, so sind je nach hierarchischer Tiefe des weiteren Elementes zahlreiche Mausklicks erforderlich.

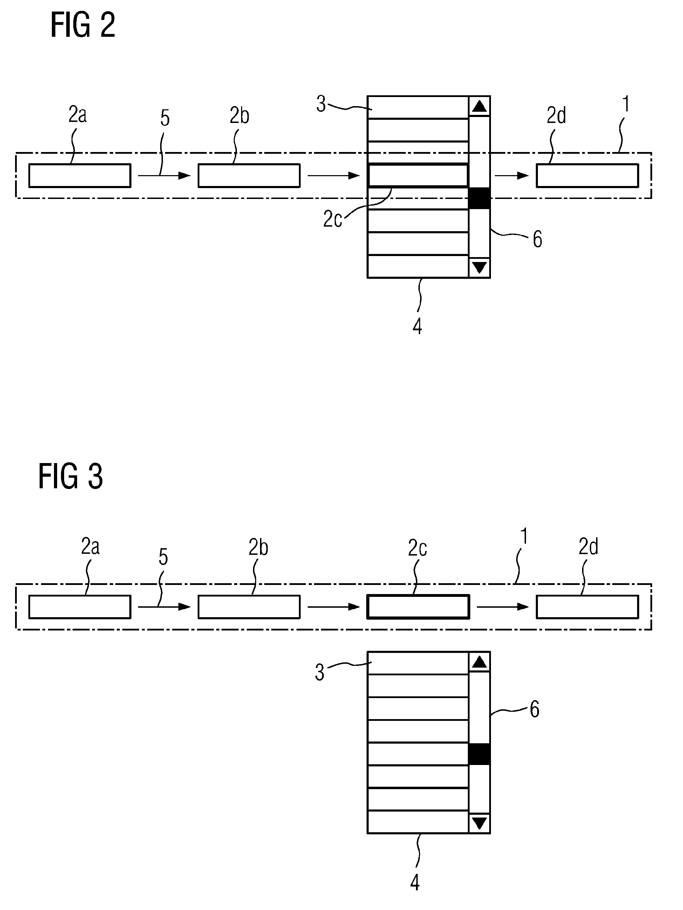

FIG 2 zeigt eine Darstellung von in einer hierarchischen Struktur geordneten Elementen gemäß einer ersten Ausführung der Erfindung. Die hierarchische Struktur weist vier Hierarchieebenen auf, wobei jede Hierarchieebene durch ein stellvertretendes Element 2a,2b,2c,2d dargestellt ist. So wird die oberste Hierarchieebene durch ein erstes stellvertretendes Element 2a repräsentiert, die zweite Hierarchieebene durch ein zweites stellvertretendes Element 2b, die dritte Hierarchieebene durch ein drittes stellvertretendes Element 2c und die vierte durch ein viertes stellvertretendes Element 2d. Es soll sich hierbei beispielsweise um die Hierarchieebenen eines Projektierungswerkzeuges für die Automatisierungstechnik handeln. Beispielsweise können mit diesem Projektierungswerkzeug verschiedene Antriebssysteme eines Automatisierungssystems konfiguriert werden.

In dem dargestellten Szenario selektiert ein Anwender mit Hilfe eines Mauszeigers das dritte stellvertretende Element 2c der linearen Kette 1. Sobald das dritte stellvertretende Element 2c markiert ist, öffnet sich eine Liste 4, innerhalb derer weitere Elemente 3 angezeigt werden. Beispielsweise handelt es sich bei dem selektierten stellvertretenden dritten Element 2c um ein spezielles Antriebssystem, welches aus einer Liste verschiedenster Antriebssysteme auswählbar ist. Der Anwender hat nun die Möglichkeit, innerhalb der Liste 4 ein weiteres Element 3, welches ein alternatives Antriebssystem darstellt, auszuwählen. Innerhalb der darunter liegenden Hierarchieebene, die durch das vierte stellvertretende Element 2d dargestellt wird, kann der Anwender anschließend für das selektierte Antriebssystem gewisse Parameter einstellen. Die Auswahl der Parameter ist in analoger Weise möglich.

Die in FIG 2 gezeigte Darstellung der hierarchischen Struktur erlaubt dem Anwender ein sehr einfaches Navigieren. Im Gegensatz zu der weit verbreiteten Baumdarstellung hierarchischer Strukturen kann der Anwender innerhalb der linearen Kette 1 sehr schnell von einem Element zum anderen springen. Durch Anwählen eines der stellvertretenden Elemente 2a,2b,2c,2d hat der Anwender sehr schnell Zugriff auf jedes Element der hierarchischen Struktur unabhängig von dessen Position innerhalb der hierarchischen Struktur. Wird beispielsweise innerhalb der untersten hierarchischen Struktur ein bestimmter Sollwert für ein erstes Antriebssystem gesetzt, und soll derselbe Sollwert für ein alternatives Antriebssystem belegt werden, so muss dieses alternative Antriebssystem hierzu lediglich innerhalb der vorletzten Hierarchieebene gewählt werden. Ein erneutes Anwählen des entsprechenden Sollwertes innerhalb der untersten Hierarchieebene ist hierbei im Gegensatz zu einer Baumstruktur nicht notwendig.

Die einzelnen stellvertretenden Elemente 2a,2b,2c,2d sind innerhalb der linearen Kette 1 durch Trennzeichen 5, die als Pfeile ausgeführt sind, voneinander getrennt. Die Liste 4 der weiteren Elemente 3 wird bei der in FIG 2 dargestellten Ausführungsform direkt über das von dem Anwender selektierte dritte stellvertretende Element 2c gelegt, so dass dieses Element direkt als Bestandteil der Liste 4 erscheint. Darüber hinaus enthält die Liste 4 einen Scrollbalken 6, mit dem der Anwender durch die Liste hindurchblättern kann. Auf diese Art und Weise ist eine verkürzende Darstellungsform möglich, die bei sehr großen Listen mit sehr vielen Elementen von Vorteil sein kann.

FIG 3 zeigt eine Darstellung von in einer hierarchischen Struktur geordneten Elementen gemäß einer zweiten Ausführungsform der Erfindung. Auch hier ist die hierarchische Struktur in Form einer linearen Kette 1 angezeigt. Bezugszeichen und Bezeichnungen der Elemente der linearen Kette 1 entsprechen den bereits in FIG 2 verwendeten.

Auch in FIG 3 wird das dritte stellvertretende Element 2c von einem Anwender mit Hilfe einer Maus angewählt, so dass sich eine Liste 4 mit weiteren Elementen 3 öffnet. Im Gegensatz zu der Darstellung gemäß FIG 2 wird hier die Liste jedoch unterhalb des selektierten dritten stellvertretenden Elementes 2c dargestellt. Eine derartige Darstellungsweise ist insbesondere dann vorteilhaft, wenn die Liste 4 breiter als das selektierte dritte stellvertretende Element 2c ist. Alternativ hierzu kann selbstverständlich die Liste 4 auch oberhalb des selektierten dritten stellvertretenden Elementes 2c angezeigt werden.

Auch in dem hier dargestellten Fall ist der Platzbedarf zur Darstellung einer hierarchischen Struktur wesentlich geringer als bei einer baumartigen Darstellung. Der Anwender erhält anhand der Darstellung als lineare Kette 1 sehr schnell einen Überblick darüber, an welcher Stelle innerhalb der hierarchischen Struktur sich welches Element befindet, ohne dass hierzu eine zusätzliche explizite Pfadangabe notwendig ist.

Die vorliegende Erfindung soll nicht auf die hier exemplarisch gezeigten Ausführungsformen beschränkt sein. Vielmehr sind weitere Ausführungsformen denkbar und von der Erfindung umfasst, solange der Grundgedanke, das eine hierarchische Struktur in Form einer linearen Kette angezeigt wird, die aus stellvertretenden Elementen für jede Hierarchieebene besteht, und der Anwender nach der Selektion eines stellvertretenden Elementes eine Liste weiterer Elemente der selektierten Hierarchieebene erhält, erhalten bleibt. So ist z.B. neben der in den Figuren 2 und 3 gezeigten horizontalen Ausführungsformen der linearen Kette eine vertikale Darstellung der hierarchischen Struktur denkbar und von der Erfindung umfasst. In einem solchen Fall würde es sich anbieten, die Liste 4 der weiteren Elemente 3 neben den selektierten stellvertretenden Elementen 2a,2b,2c,2d anzuordnen. Die Listenelemente müssen nicht zwangsläufig vertikal angeordnet sein. Auch eine horizontale Auflistung der weiteren Elemente ist denkbar und von der Erfindung umfasst.

In den Figuren 1 und 2 sind die Elemente der hierarchischen Struktur absichtlich lediglich in Form von Rechtecken schematisch dargestellt. Bei einer konkreten Darstellungsform können die Elemente der hierarchischen Struktur in textbasierter Form dargestellt werden, z.B. in Form eines Links, der dem Anwender weitere Daten zur Verfügung stellt. Alternativ ist auch eine grafische Repräsentation der Elemente der hierarchischen Struktur denkbar.

Für die einfache Lernbarkeit der Navigationsanzeige ist es sinnvoll auf bekannte existierende Darstellungsformen zurückzugreifen, die mit der Maus angelegt werden können. Dies können beispielsweise auch Schaltflächen (Buttons) oder Auswahllisten (Combolisten) sein.

## Patentansprüche

1. Verfahren zur Darstellung von in einer hierarchischen Struktur geordneten Elementen einer Softwareumgebung mit folgenden Verfahrensschritten:
- Anzeigen einer linearen Kette (1) aus jeweils genau einem stellvertretenden Element (2a,2b,2c,2d) jeder Hierarchieebene, wobei die stellvertretenden Elemente (2a,2b,2c,2d) innerhalb der linearen Kette (1) gemäß ihrer Hierarchiestufe geordnet sind und
- Anzeigen weiterer Elemente (3) einer ersten Hierarchiestufe, nachdem ein Anwender ein erstes stellvertretendes Element (2c) der linearen Kette, welches der ersten Hierarchiestufe zugeordnet ist, selektiert hat.

2. Verfahren nach Anspruch 1,
wobei beim Anzeigen der linearen Kette die stellvertretenden Elemente (2a,2b,2c,2d) in horizontaler Richtung auf- oder absteigend geordnet und insbesondere durch Trennzeichen (5) voneinander getrennt werden.

3. Verfahren nach Anspruch 1,
wobei beim Anzeigen der linearen Kette die stellvertretenden Elemente (2a,2b,2c,2d) in vertikaler Richtung auf- oder absteigend geordnet und insbesondere durch Trennzeichen (5) voneinander getrennt werden.

4. Verfahren nach einem der vorhergehenden Ansprüche,
wobei die weiteren Elemente (3) in Form einer Liste (4) angezeigt werden.

5. Verfahren nach Anspruch 4,
wobei die Liste (4) unmittelbar über dem selektierten ersten stellvertretenden Element (2c) angeordnet wird, so dass das erste stellvertretende Element (2c) direkt als Listenelement erscheint.

6. Verfahren nach Anspruch 4,
wobei die Liste (4) unter oder über dem vom Anwender selektierten ersten stellvertretenden Element (2c) angeordnet wird.

7. Verfahren nach einem der Ansprüche 3 bis 6,
wobei die Liste (4) einen Scrollbalken (6) aufweist.

8. Verfahren nach einem der vorhergehenden Ansprüche,
wobei die Elemente der Softwareumgebung in grafischer Form dargestellt werden.

9. Verfahren nach einem der vorhergehenden Ansprüche,
wobei die Elemente der Softwareumgebung in textbasierter Form dargestellt werden.

10. Verfahren nach einem der vorhergehenden Ansprüche,
wobei die Elemente Funktionen der Softwareumgebung repräsentieren.

11. Verfahren nach einem der vorhergehenden Ansprüche,
wobei das Verfahren zur Darstellung von Elementen eines Projektierungswerkzeugs insbesondere für die Automatisierungstechnik und/oder Antriebstechnik vorgesehen ist.

12. Computerprogrammprodukt zur Durchführung eines Verfahrens nach einem der Ansprüche 1 bis 11.

13. Vorrichtung zur Darstellung von in einer hierarchischen Struktur geordneten Elementen einer Softwareumgebung mit
- ersten Mitteln zur Anzeige einer linearen Kette (1) aus jeweils genau einem stellvertretenden Element (2a,2b,2c,2d) jeder Hierarchieebene, wobei die stellvertretenden Elemente (2a,2b,2c,2d) innerhalb der linearen Kette (1) gemäß ihrer Hierarchiestufe geordnet sind und
- zweiten Mitteln zur Anzeige weiterer Elemente (3) einer ersten Hierarchiestufe, nachdem ein Anwender ein erstes stellvertretendes Element (2c) der linearen Kette, welches der ersten Hierarchiestufe zugeordnet ist, selektiert hat.

14. Vorrichtung nach Anspruch 13,
wobei die ersten Mittel derartig ausgeführt sind, dass beim Anzeigen der linearen Kette die stellvertretenden Elemente (2a,2b,2c,2d) in horizontaler Richtung auf- oder absteigend geordnet und insbesondere durch Trennzeichen (5) voneinander getrennt sind.

15. Vorrichtung nach Anspruch 13,
wobei die ersten Mittel derartig ausgeführt sind, dass beim Anzeigen der linearen Kette die stellvertretenden Elemente (2a,2b,2c,2d) in vertikaler Richtung auf- oder absteigend geordnet und insbesondere durch Trennzeichen (5) voneinander getrennt sind.

16. Vorrichtung nach einem der Ansprüche 13 bis 15,
wobei die zweiten Mittel zum Anzeigen der weiteren Elemente (3) in Form einer Liste (4) vorgesehen sind.

17. Vorrichtung nach einem der Ansprüche 13 bis 16,
wobei die zweiten Mittel zum Anzeigen der Liste (4) unmittelbar über dem selektierten ersten stellvertretenden Element (2c) vorgesehen sind, so dass das erste stellvertretende Element (2c) direkt als Listenelement erscheint.

18. Vorrichtung nach einem der Ansprüche 13 bis 17,
wobei die zweiten Mittel zum Anordnen der Liste (4) unter oder über dem vom Anwender selektierten ersten stellvertretenden Element (2c) vorgesehen sind.

19. Vorrichtung nach einem der Ansprüche 13 bis 18,
wobei die zweiten Mittel zum Anzeigen eines Scrollbalken (6) zum Scrollen der Liste (4) vorgesehen sind.

20. Vorrichtung nach einem der Ansprüche 13 bis 19,
wobei die Vorrichtung zur Darstellung der Elemente der Softwareumgebung in grafischer Form vorgesehen ist.

21. Vorrichtung nach einem der Ansprüche 13 bis 20,
wobei die Vorrichtung zur Darstellung der Elemente der Softwareumgebung in textbasierter Form vorgesehen ist.

22. Vorrichtung nach einem der Ansprüche 13 bis 21,
wobei die Elemente Funktionen der Softwareumgebung repräsentieren.

23. Vorrichtung nach einem der Ansprüche 13 bis 22,
wobei die Vorrichtung zur Darstellung von Elementen eines Projektierungswerkzeugs insbesondere für die Automatisierungstechnik und/oder Antriebstechnik vorgesehen ist.
